# DEMANDE DE BREVET EUROPEEN

(11) **EP 3 574 762 A1**
(43) Date de publication de la demande: **04.12.2019**
(21) Numéro de dépôt: 19170998.9
(22) Date de dépôt: 25.04.2019
(51) Int. Cl.: A21C 5/04, F26B 25/18, A21C 15/04

(54) **CLAIE**

(30) Priorité: 30.05.2018 FR 1870620
(71) Demandeur: TSA INOX, 88210 Moussey (FR)
(72) Inventeur: MORHAIN, Rémi, 88470 Saint Michel sur Meurthe (FR); SCHWARTZEL, Gérald, 88100 Saint Dié (FR); MORILLON, Nicolas, 35510 Cesson-Sévigné (FR)
(74) Mandataire: Cabinet Bleger-Rhein-Poupon

(57) **Abrégé**

Claie destinée à un usage agroalimentaire comprenant un cadre présentant un quadrillage sur lequel repose un store, caractérisée en ce que ledit store est un panneau de métal déployé dont au moins les bords, rendus coupants par la mise à dimension dudit panneau, sont recouverts par un jonc de protection, solidarisé audit cadre.

## Description

La présente invention entre dans le domaine des claies destinées à un usage agroalimentaire, notamment des claies d'affinage de fromages, des claies de fumage ou encore des claies de séchage d'aliments tels que le poisson, la viande ou les fruits.

De manière connue, dans le domaine agroalimentaire, notamment celui de la fabrication de fromage, il est usuel que le fromager dépose le fromage à affiner sur un store, notamment un store d'égouttage destiné à l'évacuation du sérum. De manière générale, un store, notamment un store d'égouttage, est réalisé en matière plastique et repose sur une claie.

Or les stores en plastique présentent l'inconvénient d'être fragiles d'où l'obligation d'un nettoyage manuel et minutieux, leur durée de vie n'excède pas les 15 ans. Généralement pour atteindre 15 ans de vie, il est obligatoire de renforcer le store ce qui en augmente désavantageusement le coût.

De plus, l'opération de nettoyage manuelle des stores en plastique est très longue, en général plus de 5h, et nécessite beaucoup d'expérience de la part des opérateurs pour éviter que le store ne se casse. Le nettoyage du store représente également un coût non négligeable à la fois en personnel et en produits de lavage. En effet, ces derniers ne doivent pas abîmer le plastique.

En outre, le nettoyage des stores en plastique des claies connues étant trop complexe, à ce jour un nettoyage autre que manuel n'est pas envisageable. Le processus de nettoyage des stores, à cause de leur fragilité, ne peut pas être automatisé et faire l'objet d'une chaine de production industrielle. La chaine de production industrielle est donc ralentie par l'obligation de nettoyage manuel des stores en plastique.

Il convient dès lors de trouver une solution alternative aux stores existants qui soit moins couteuse, plus facile d'entretien au lavage, permettant la production à échelle industrielle agroalimentaire de fromage, poisson, viande ou fruit, et facile d'utilisation et d'entretien pour les opérateurs.

La présente invention a pour but de pallier les inconvénients de l'état de la technique en proposant une claie destinée à un usage agroalimentaire comprenant un cadre présentant un quadrillage sur lequel repose un store.

De manière spécifique, ledit store est un panneau de métal déployé dont au moins les bords, rendus coupants par la mise à dimension dudit panneau, sont recouverts par un jonc de protection, solidarisé audit cadre.

Le panneau de métal déployé a pour avantage d'être facile à nettoyer, résistant dans le temps à la cassure et aux produits de nettoyage.

Il est possible de le mettre dans un système automatique de nettoyage sans qu'il ne se brise, sous l'effet de la chaleur, de la pression ou d'un système de brossage.

Le store étant solidaire du cadre et en matériau résistant et solide, il est possible d'intégrer la claie de l'invention dans un procédé automatisé de production industrielle d'agroalimentaire pour la production de fromage, poisson, viande ou fruit, en s'affranchissant de l'étape manuelle de nettoyage du store. En conséquence, la claie de l'invention permet à la fois un gain de temps et un gain pécunier dans le processus global de fabrication de l'aliment en question.

Afin d'éviter que la bordure métallique coupante du store, que l'on a mis à la dimension de la claie par découpage, ne blesse les utilisateurs, on positionne un jonc de protection solidaire au cadre.

Ledit jonc permet de sécuriser la préhension de la claie lors de son déplacement, par exemple pour le nettoyage, en évitant à l'utilisateur de se blesser avec la bordure métallique coupante du store.

De plus, selon d'autres caractéristiques de l'invention :
- Ledit cadre est constitué par deux longerons solidarisés à deux traverses ou crosses munies de moyens supports,
- Lesdits moyens supports consistent en plusieurs pattes en fil plié,
- Ledit quadrillage est constitué d'un croisement avec superposition de plusieurs fils métalliques.

Ainsi, la structure de la claie est solide.

Le cadre permet de recevoir et de maintenir le store entre les longerons et les traverses.

Les moyens support permettent de maintenir la claie, sur une surface mais également de permettre une superposition de plusieurs claies les unes sur les autres, de manière à superposer plusieurs stores pour produire du fromage, du poisson, de la viande ou des fruits en quantité industrielle.

Le croisement avec superposition de fils métalliques du quadrillage présente une grande rigidité permettant de recevoir et supporter le store en métal déployé.

Selon une autre caractéristique de la présente invention, ledit panneau de métal déployé est en un acier inoxydable, de préférence un acier austénitique Ce panneau de métal déployé a pour avantage d'être rigide pour supporter le poids des aliments tels que les fromages à affiner, les poissons ou viande à fumer et sécher. Le panneau de métal déployé est donc en un matériau de type aciers inoxydables qui est facile d'entretien et de nettoyage, et évite la prolifération des micro-organismes.

D'autres caractéristiques et avantages de l'invention ressortiront de la description détaillée qui va suivre des modes de réalisation non limitatifs de l'invention, en référence aux figures annexées, dans lesquelles :
- la figure 1 représente schématiquement une vue en perspective d'une claie destinée à un usage agroalimentaire de l'invention, en particulier d'une claie,
- la figure 2 représente une vue partielle en perspective de la même claie.

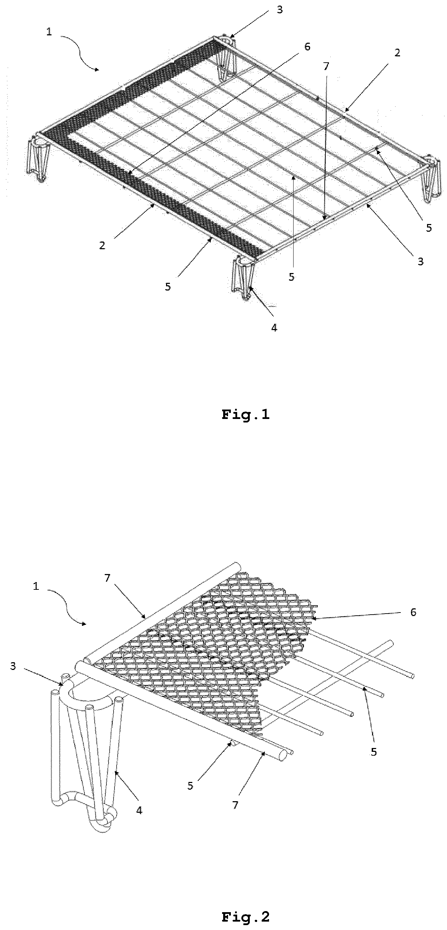

La présente invention concerne une claie 1 destinée à un usage agroalimentaire, notamment une claie d'affinage de fromage tel que visible sur la figure 1.

Ladite claie 1 comprend un cadre constitué par deux longerons 2 en vis-à-vis. Ces deux longerons sont solidarisés entre eux par deux traverses ou crosses 3.

L'association des deux longerons 2 et des deux traverses ou crosses 3 forme ainsi le cadre.

Afin de surélever ladite claie ou pour permettre la superposition de plusieurs claies les unes sur les autres, ledit cadre est muni de moyens support 4.

Plus spécifiquement, chaque traverse ou crosse 3 est munie de moyens support 4.

Selon un mode de réalisation particulier visible sur la figure 1, ledit moyen support 4 consiste en une combinaison de plusieurs pattes en fil plié qui se trouvent dans le prolongement de la crosse ou de la traverse 3.

Ainsi, l'utilisateur de la claie 1 de l'invention peut, au travers des moyens support 4, manipuler facilement la claie 1, pour par exemple la transporter en vue de son nettoyage, ou encore la position en superposition d'une autre claie 1.

Selon une autre particularité de l'invention, ledit cadre présente un quadrillage constitué d'un croisement d'une superposition de fils métalliques 5, sur lequel repose un store 6.

En d'autres termes, le cadre est constitué d'un quadrillage de fils métalliques 5, de préférence des fils en inox, et de deux longerons 2 en vis-à-vis, solidarisés entre eux par deux traverses ou crosses 3 munies de moyens supports 4.

Le quadrillage en croisement de fils métalliques 5 est apte à soutenir et supporter ledit store 6.

Ledit store 6 repose donc sur ledit cadre, en particulier sur son quadrillage.

Selon une particularité de l'invention, ledit store 6 est un panneau de métal déployé.

De préférence, ledit panneau de métal déployé est en un acier inoxydable, préférentiellement un acier austénitique.

Un panneau de métal déployé en tant que store 6 présente pour avantage d'être facile à usiner, facile à nettoyer, plus pérenne, solide et rigide dans le temps.

Avantageusement, le coût de revient sur le long terme pour fabriquer la même quantité de fromage, poisson, viande ou fruit est moindre avec un store métallique 6 qu'avec un store en plastique.

En effet, avec un store métallique 6, on économise sur le temps de nettoyage que l'on peut automatiser, on diminue les risques de casse et on augmente la capacité de charge que peut recevoir ledit store en métal déployé 6 par rapport à un store en plastique.

Toutefois, comme la découpe du store 6 en métal déployé est mise à dimension en fonction de la taille du cadre, une partie au moins des bords du store 6 est coupante. Ainsi, pour la partie du store 6 en métal déployé qui correspond à la zone de coupe du panneau, il existe un risque de coupure pour les usagers qui seraient en contact avec les bords coupants du panneau du store 6.

En d'autres termes, lorsque l'on positionne le store 6 en métal déployé au-dessus du quadrillage du cadre, de par la mise à dimension dudit panneau en métal déployé, les bordures du store 6, notamment celles à proximité des longerons 2 et des crosses ou traverses 3, sont coupantes. Ces bordures du store 6 rendues coupantes reposant sur le cadre, génèrent un danger pour les utilisateurs manipulant la claie 1, ces derniers risquant de se couper.

Afin de protéger les bords rendus coupants par la mise en dimension du panneau du store 6, ladite claie 1 comporte des joncs de protection 7.

Lesdits joncs de protection 7 recouvrent au moins l'intégralité des bords rendus coupants du panneau du store 6, de sorte à protéger les utilisateurs d'un risque de coupe.

En effet, selon l'invention, lesdits joncs de protection 7 sont solidarisés au cadre, par exemple par soudage, de sorte à recouvrir les bords coupants du store 6 et éviter tout risque de coupure par l'utilisateur de la claie 1.

En d'autres termes, lesdits joncs de protection 7 recouvrent à la fois les bords du cadre, c'est-à-dire les longerons 2 et les crosses ou traverses 3, ainsi que les bords rendus coupants du store 6, ces derniers reposant sur le quadrillage du cadre à proximité desdits longerons 2 et desdites crosses ou traverses 3. Ainsi, lesdits joncs de protection 7 recouvrent directement à la fois les bords coupants du store 6 reposant au-dessus du quadrillage du cadre et, les bords du cadre, ceci permettant de protéger les utilisateurs de la claie 1 des risques de coupures.

Ainsi, la claie 1 de l'invention permet d'avoir un store 6 facile d'entretien et de nettoyage, très résistant, capable de supporter une forte charge de fromage, poisson, viande ou fruit, de faible coût de revient sur le long terme et qui soit sécuritaire pour l'opérateur lors de sa manipulation.

La claie 1 de l'invention avec son store 6 en métal déployé est une très bonne solution alternative aux claies connues de l'art antérieur présentant un store en plastique.

## Revendications

1. Claie (1) destinée à un usage agroalimentaire comprenant un cadre présentant un quadrillage sur lequel repose un store (6), **caractérisée en ce que** ledit store (6) est un panneau de métal déployé dont au moins les bords, rendus coupants par la mise à dimension dudit panneau, sont recouverts par un jonc de protection (7), solidarisé audit cadre.

2. Claie (1) destinée à un usage agroalimentaire, selon la revendication précédente, **caractérisée en ce que** ledit cadre est constitué par deux longerons (2) solidarisés à deux traverses ou crosses (3) munies de moyens supports (4).

3. Claie (1) destinée à un usage agroalimentaire, selon la revendication précédente, **caractérisée en ce que** lesdits moyens supports (4) consistent en plusieurs pattes en fil plié.

4. Claie (1) destinée à un usage agroalimentaire, selon l'une quelconque des revendications précédentes, **caractérisée en ce que** ledit quadrillage est constitué d'un croisement avec superposition de plusieurs fils métalliques (5).

5. Claie (1) destinée à un usage agroalimentaire, selon l'une quelconque des revendications précédentes, **caractérisée en ce que** ledit quadrillage est constitué d'un croisement avec superposition de plusieurs fils en inox.

6. Claie (1) destinée à un usage agroalimentaire selon l'une quelconque des revendications précédentes, **caractérisée en ce que** ledit panneau de métal déployé est en un acier inoxydable, de préférence un acier austénitique.

7. Claie (1) destinée à un usage agroalimentaire, selon l'une quelconque des revendications précédentes **caractérisé en ce que** ladite claie (1) est une claie d'affinage de fromage, une claie de séchage ou une claie de fumage d'aliment de type poisson, viande ou fruit.
